# EUROPÄISCHE PATENTANMELDUNG

(11) **EP 4 391 350 A1**
(43) Veröffentlichungstag der Anmeldung: **26.06.2024**
(21) Anmeldenummer: 23211763.0
(22) Anmeldetag: 23.11.2023
(51) Int. Cl.: H02P 1/04, A47J 31/42, H02P 29/20, H02P 29/032

(54) **VERFAHREN UND VORRICHTUNG ZUR ANSTEUERUNG EINES ELEKTROMOTORS**

(30) Priorität: 23.12.2022 DE 102022214363
(71) Anmelder: BSH Hausgeräte GmbH, 81739 München (DE)
(72) Erfinder: Marchner, Maximilian, 83342 Tacherting (DE); Nerbl, Christian, 83512 Wasserburg am Inn (DE); Garschhammer, Florian, 83349 Palling (DE); Gallinger, Simon, 83301 Traunreut (DE)

(57) **Zusammenfassung**

Die Erfindung betrifft ein Verfahren zur Ansteuerung eines Elektromotors (E), wobei für eine Änderung der Drehzahl (D) des Elektromotors (E) von einer Startdrehzahl (DS) zu einer Zieldrehzahl (DZ) eine dem Elektromotor (E) zur Verfügung gestellte Antriebsleistung (P) mittels einer Rampenfunktion (R) so moduliert wird, dass ausgehend von der Startdrehzahl (DS) die Zieldrehzahl (DZ) erst nach mindestens 200 ms erreicht wird. Die Erfindung betrifft des Weiteren eine entsprechende Vorrichtung (10) und einen Kaffeevollautomaten (1) mit der Vorrichtung (10).

## Beschreibung

Die Erfindung betrifft ein Verfahren und eine Vorrichtung zur Ansteuerung eines Elektromotors, insbesondere des Motors eines Mahlwerks eines Kaffeevollautomaten.

Kaffeevollautomaten besitzen in der Regel ein durch einen Elektromotor angetriebenes Mahlwerk zum Malen von Kaffeebohnen. Das Einschalten des Elektromotors erfolgt dabei unter Anlegen der vollen zur Verfügung stehenden Spannung. Dies führt nicht nur zu einer deutlich wahrnehmbaren Geräuschentwicklung, sondern auch zum Auftreten von Stromspitzen, die die elektromagnetische Verträglichkeit (EMV) des Geräts negativ beeinflussen und die Lebensdauer des Elektromotors reduzieren kann.

Aufgabe der vorliegenden Erfindung war es, ein Verfahren und eine Vorrichtung zur Ansteuerung eines Elektromotors, insbesondere des Motors eines Mahlwerks eines Kaffeevollautomaten, sowie einen Kaffeevollautomaten zur Verfügung zu stellen, der auf eine einfache, leise und schonende Art und Weise einen Mahlvorgang von Kaffeebohnen durchführen kann.

Diese Aufgabe wird durch ein Verfahren, eine Steuervorrichtung sowie einen Kaffeevollautomaten gemäß dem Hauptanspruch bzw. einem der Neben- oder Unteransprüche gelöst:
Das erfindungsgemäße Verfahren dient zur Ansteuerung eines Elektromotors, bevorzugt des Mahlwerks eines Kaffeevollautomaten. Die Ansteuerung betrifft dabei insbesondere das Anfahren des Elektromotors, weil dabei die größte Geräuschentwicklung und die größten Stromspitzen entstehen. Die Ansteuerung kann aber auch das Abbremsen des Elektromotors nach dem Mahlvorgang betreffen, da auch dort Stromspitzen entstehen können. Insbesondere umfasst die Ansteuerung auch eine Umkehr der Drehrichtung des Elektromotors, wobei solches im Grunde als ein Abbremsen des Motors mit anschließendem Anfahren (mit umgedrehter Drehrichtung) angesehen werden kann.

Erfindungsgemäß wird für eine Änderung der Drehzahl des Elektromotors, also für ein Anfahren oder Abbremsen des Elektromotors, eine dem Elektromotor zur Verfügung gestellte Antriebsleistung mittels einer Rampenfunktion so moduliert, dass die Drehzahl des Elektromotors ausgehend von einer Startdrehzahl (z.B. Null) eine Zieldrehzahl (z.B. die Maximaldrehzahl) erreicht. Die Rampenfunktion ist dabei so gestaltet, dass diese Zieldrehzahl (ausgehend von der Startdrehzahl) erst nach mindestens 200 ms erreicht wird. Im Grunde entspricht diese Zeit einer zeitlichen Länge der Rampenfunktion. Selbstverständlich unterscheiden sich Startdrehzahl und Zieldrehzahl, da ansonsten keine Änderung möglich wäre. Der Unterschied ist dabei bevorzugt größer als die halbe Maximaldrehzahl des Motors, welche die Drehzahl des Motors bei einer bestimmungsgemäßen Maximalleistung ist. Insbesondere ist dies mehr als 3000 U/min. Gemeint ist stets die Drehzahl der Motorwelle.

Das Anfahren des Elektromotors erfolgt bevorzugt so, dass der Anstieg der dem Elektromotor zur Verfügung gestellten Antriebsleistung von einem Startwert (der bevorzugt der Drehzahl Null entspricht) bis zu einem vorgegebenen Zielwert Z (der typischerweise der maximalen gewünschten Drehzahl für den Mahlvorgang entspricht), zumindest in einem vorgegebenen Intervall der Rampenfunktion 5 Z pro Sekunde nicht übersteigt. Bei einem Abbremsen gilt dies entsprechend für den Abfall der Antriebsleistung. Der Begriff "Ansteuerung" umfasst auch eine Regelung des Elektromotors (im Folgenden vereinfacht: "Motor").

Die Antriebsleistung ist diejenige Leistung, die den Motor antreibt. Sie wird in der Regel durch die dem Motor zur Verfügung gestellten Spannung bestimmt und kann ihr auch entsprechen. Als Maximalleistung kann die Leistung bei der bestimmungsgemäßen Spannung für den Motor angesehen werden, z.B. 120 V oder 240 V. Erfindungsgemäß wird der Motor jedoch bevorzugt mit einer periodischen Modulation mit einem bestimmten, auf der Rampenfunktion basierenden Tastgrad angetrieben. Dieser Antrieb basiert darauf, dass dem Motor in regelmäßigen, immer gleichen Perioden Spannungspulse zur Verfügung gestellt werden, deren zeitliche Länge und Form die Antriebsleistung ergeben. Hierzu sollte beachtet werden, dass die Rampenfunktion nicht zwingend die Antriebsleistung vorgeben muss, sondern deren Modulation dient. Somit kann die Rampenfunktion durchaus einen Phasenwinkel, einen Tastgrad oder sogar eine Wellenform bzw. Amplitude vorgeben. Die Hauptsache ist, dass der Motor nicht sofort seine Zieldrehzahl erreicht, sondern erst nach einer Zeit, die länger dauern muss als 200 ms.

Beim Anfahren des Motors wird die Antriebsleistung so verändert, dass der Motor von einer Startdrehzahl bis zu einer Zieldrehzahl, bevorzugt der gewünschten Maximaldrehzahl, hochgefahren wird. Das Anfahren beginnt dabei mit einem Startwert der dem Motor zur Verfügung gestellten Antriebsleistung, der die Startdrehzahl bewirkt (bevorzugt einer Antriebsleistung von Null, kann aber theoretisch auch größer als Null sein) und endet bei einem Zielwert Z, der die Zieldrehzahl bewirkt.

Die Startdrehzahl beträgt beim Anfahren bevorzugt 0 U/min, kann aber theoretisch auch größer sein, sollte jedoch 1000 U/min nicht überschreiten.

Die Zieldrehzahl ist bevorzugt größer als 5000 U/min, insbesondere größer als 7000 U/min. Jedoch sollte der Zielwert nicht zu hoch sein, zumindest wenn ein Mahlwerk betrieben werden soll, und sollte unter 20000 U/min liegen, insbesondere unter 10000 U/min. Relativ zur Maximaldrehzahl M des Motors gesehen, also der Drehzahl bei Maximalleistung, ist die Zieldrehzahl bevorzugt größer als 10% der Maximaldrehzahl (> 0,1M), insbesondere größer als 50% der Maximaldrehzahl (> 0,5M), besonders bevorzugt größer als 66% der Maximaldrehzahl (> 0,66M) oder entspricht sogar der Maximaldrehzahl (= M). Ist die Startdrehzahl größer als Null, liegt diese Zieldrehzahl bevorzugt um den betreffenden Wert über der Startdrehzahl.

Beim Abbremsen verhält es sich genau umgekehrt. Hier ist die Startdrehzahl hoch und entspricht den vorangegangenen Werten für die Zieldrehzahl; die Zieldrehzahl dagegen ist niedrig und entspricht den vorangegangenen Werten für die Startdrehzahl. Die Antriebsleistung wird nun so verändert, dass der Motor von der Startdrehzahl bis zur Zieldrehzahl heruntergefahren, also abgebremst wird. Mit "Abbremsen" ist hier gemeint, dass der Motor mit stetig abnehmender Leistung versorgt wird, also entsprechend umgekehrt zum Anfahren, wo der Motor mit stetig zunehmender Leistung versorgt wird. Das Abbremsen beginnt dabei mit einem Startwert der dem Motor zur Verfügung gestellten Antriebsleistung, der die Startdrehzahl bewirkt und endet bei einem Zielwert Z, der die Zieldrehzahl bewirkt.

Die Rampenfunktion gibt vor, wie die effektive Leistung moduliert werden muss, um vom Startwert zum Zielwert zu gelangen. Sie ist so gestaltet, dass der Zielwert erst nach mindestens 200 ms erreicht wird. Dazu ist sie bevorzugt so gestaltet, dass zumindest in einem vorgegebenen Intervall der Rampenfunktion, bevorzugt jedoch in der gesamten Rampenfunktion, der Anstieg der Antriebsleistung in der Zeit den Wert von 5 Z pro Sekunde nicht übersteigt. Beispielsweise entspricht dies bei einem linearen Anstieg der Antriebsleistung von 0 bis Z der Zeitspanne von 200 ms. Für einen Abbremsvorgang gilt entsprechendes. Bevorzugt ist die Zeitspanne, also die zeitliche Gesamtlänge der Rampenfunktion, länger als 200 ms. Damit der Mahlvorgang verglichen mit einem sofortigen Anschalten des Motors nicht länger als nötig dauert, ist bevorzugt, dass die zeitliche Gesamtlänge der Rampenfunktion kürzer als 2 s ist, also die Zieldrehzahl früher als nach 2 s erreicht wird. Besonders bevorzugt ist die Zeitspanne (also die zeitliche Gesamtlänge der Rampenfunktion) größer als 400 ms, insbesondere größer als 700 ms. Insbesondere ist dabei der Anstieg bzw. Abfall der dem Elektromotor zur Verfügung gestellten Antriebsleistung kleiner als 7 Z/s (pro Sekunde), insbesondere kleiner als 9 Z/s, oder gar kleiner als 10 Z/s.

Die Erfinder erkannten, dass ein großer Anstieg bzw. Abfall der Motordrehzahl in zu kurzer Zeit sowohl eine erhöhte Lärmbelästigung als auch Nachteile bezüglich EMV mit sich bringt. Da von der dem Motor zur Verfügung gestellten Antriebsleistung die Motordrehzahl abhängt, wird mit dem Verfahren der Anstieg der Motordrehzahl beim Anfahren des Motors (bzw. der Abfall bei einem Abbremsen) im Vergleich zu einem herkömmlichen Einschalten herabgesetzt. Jedoch wird dadurch die zum Mahlen erforderliche Motordrehzahl nicht herabgesetzt, sondern nur geringfügig später erreicht, so dass das Resultat des Mahlvorgangs nicht beeinträchtigt wird.

Bei einem bevorzugten Verfahren ergibt sich die Antriebsleistung aus einer modulierten Spannung, wobei die Spannung während eines Anfahrens des Motors mittels der Rampenfunktion moduliert wird. Dabei kann die Höhe der Spannung moduliert werden. Besonders bevorzugt treiben innerhalb einer Vielzahl von vorgegebenen Perioden Spannungsimpulse mit auf der Rampenfunktion basierenden Tastgraden den Elektromotor an. In diesem Falle wird insbesondere der Tastgrad über die verschiedenen Perioden moduliert. Dies bedeutet, dass innerhalb einer vorbestimmten Zeitlänge bzw. Periode T ein Spannungspuls mit einer zeitlichen Länge kleiner oder gleich T an den Motor angelegt wird. Je kürzer der Spannungspuls ist, desto geringer ist die Antriebsleistung. Das zeitliche Verhältnis zwischen T und der zeitlichen Länge des Spannungspulses ist der Tastgrad. Es werden dabei viele Spannungspulse hintereinander in aufeinanderfolgenden Perioden der zeitlichen Länge T an den Motor angelegt.

Zwei bevorzugte Fälle lassen sich unterscheiden:
Bei Gleichspannung zum Antrieb des Motors wird eine Pulsweitenmodulation durchgeführt. Dabei bleibt die Spannung stets gleich. Der Tastgrad ist dann das Verhältnis der Dauer TP einer an den Motor angelegten Spannung (der Spannungspuls) zur Dauer T der jeweiligen Periode (Tastgrad = TP/T).

Bei Wechselspannung zum Antrieb des Motors kann die Periodendauer der Periode der Wechselspannung (oder bei Nutzung von Halbwellen deren Hälfte) entsprechen, man ist aber nicht zwingend auf das Vielfache der halben Periodendauer festgelegt. Es wird dann als Spannungspuls nur ein Teil der "Spannungswelle" verwendet, entweder der erste Teil oder der letzte Teil. Dies ist als Phasenanschnittsmodulation bzw. als Phasenabschnittsmodulation im Stand der Technik bekannt. Wird eine Phasenanschnittsmodulation bzw. eine Phasenabschnittsmodulation durchgeführt, kann der Tastgrad durch einen Phasenwinkel charakterisiert werden, bei dem der Phasenanschnitt endet oder der Phasenabschnitt beginnt. Der Motor erhält also nur eine Teilwelle, deren zeitliche Länge die Antriebsleistung bestimmt. Da der Phasenwinkel die zeitliche Länge der Teilwelle bestimmt, bestimmt der Phasenwinkel ebenfalls die Antriebsleistung. Je kleiner der Phasenwinkel, desto größer ist die Antriebsleistung.

Die Rampenfunktion ist bevorzugt so gestaltet, dass die Antriebsleistung, z.B. der Tastgrad, (bei fortschreitender Zeit) stetig zunimmt (beim Anfahren) oder abnimmt (beim Abbremsen). Da der Motor träge sein kann und erst bei einem Tastgrad größer Null überhaupt anfängt zu drehen, beginnt der Tastgrad zu Beginn der Rampenfunktion beim Anfahren bevorzugt bei einem Wert größer Null. Dies bedeutet, dass die Antriebsleistung zu Beginn der Rampenfunktion bevorzugt einen Startwert größer Null hat. Bevorzugt endet der Tastgrad beim Anfahren am Schluss der Rampenfunktion bei einem Wert größer als 80%, insbesondere bei 100%. Daraus ergibt sich der Zielwert der Antriebsleistung bzw. die Zieldrehzahl des Motors. Im Falle einer Phasenanschnittsmodulation beginnt die Rampenfunktion beim Anfahren bevorzugt mit einem Phasenwinkel größer als 20°. Im Falle einer Phasenabschnittsmodulation endet die Rampenfunktion bevorzugt mit einem Phasenwinkel kleiner als 340° bei voller Welle bzw. 160° bei einer Halbwelle.

Beim Abbremsen des Motors ist es bevorzugt genau umgekehrt und der Tastgrad startet zu Beginn der Rampenfunktion bei einem Wert kleiner oder gleich 100% (z.B. 80%) und endet bevorzugt bei einem Wert kleiner als 20%. Im Falle einer Phasenanschnittsmodulation beginnt die Rampenfunktion bevorzugt bei einem Phasenwinkel kleiner als 160° bei einer Halbwelle oder 340° bei einer vollen Welle.

Bei einem bevorzugten Verfahren umfasst das vorgegebene Intervall der Rampenfunktion zumindest das letzte Viertel der Rampenfunktion, insbesondere die zweite Hälfte. Die Erfinder erkannten, dass bei unterschiedlichen Rampenfunktionen unerwünschte Effekte zum Ende der Rampenfunktion hin auftraten. Besonders bevorzugt umfasst das vorgegebene Intervall die gesamte Rampenfunktion.

Bei einem bevorzugten Verfahren ist die Rampenfunktion vorgegeben, ihre Form und zeitliche Länge ist also vor ihrer Anwendung bestimmt. Die Rampenfunktion ist dabei bevorzugt so gestaltet, dass sie eine zeitdiskrete Änderung eines Phasenanschnitts bewirkt. Bei der zeitdiskreten Ansteuerung ist bevorzugt statisch festgelegt, z.B. mithilfe von Simulationen, inwiefern der Strom reduziert werden kann, so dass mit dem höchsten Effizienzgrad gemahlen werden kann. Die zeitlichen Einbußen für das Anfahren des Motors werden dadurch so gering wie möglich gehalten bei gleichzeitigem sanftem Stromanstieg.

Alternativ wird die Rampenfunktion während der Ansteuerung des Motors basierend auf Sensorwerten geregelt. Dabei ist eine PID-geregelte Änderung des Phasenanschnitts besonders bevorzugt. Bei der PID-geregelten Ansteuerung ist bevorzugt ein Regelalgorithmus hinterlegt, der die Rampenfunktion regelt.

Gemäß einem bevorzugten Verfahren kann die Rampenfunktion durch einen Benutzer ausgewählt und/oder konfiguriert werden. Es stehen dem Benutzer dazu bevorzugt mehrere vorbestimmte Rampenfunktionen zur Verfügung oder eine Auswahl an einstellbaren Parametern für eine Rampenfunktion. Parameter, die eingestellt werden können sind bevorzugt:
- ein minimaler Phasenanschnitt zur indirekten Festlegung der Zieldrehzahl,
- eine Zeit für die zeitliche Gesamtlänge der Rampenfunktion bzw. für die Dauer der Hochfahrphase,
- eine Form der Rampenfunktion,
- eine minimale und/oder maximale Breite des Tastgrades.

Bevorzugt ist die Rampenfunktion so gestaltet, dass die elektromagnetische Verträglichkeit und/oder die Lebensdauer optimiert ist. Beispielsweise können sich Magnete eines Elektromotors selbst "de-magnetisieren", wenn hohe Anlaufströme über die Zeit an einem Lastkollektiven auftreten. Wenn der Magnet bereits von Anfang an "schwach" magnetisch ist beschleunigt sich der Prozess der Demagnetisierung und ein Ausfall tritt frühzeitig ein. Ist die Rampenfunktion z.B. so gestaltet, dass der übertragene Anlaufstrom pro Zeit unter einer vorgegebenen Grenze liegt, wird sich die Lebensdauer erhöhen.

Bevorzugt erfolgt sowohl ein Anfahren des Elektromotors als auch dessen Abbremsen mittels der Rampenfunktion. Es wird also beim Anfahren die Zieldrehzahl erst nach mindestens 200 ms erreicht und der Bremsvorgang beim Abbremsen dauert ebenfalls mindestens 200 ms. Beim Anfahren ist die Zieldrehzahl höher als die Startdrehzahl und die Startdrehzahl beträgt bevorzugt Null. Beim Abbremsen ist die Startdrehzahl größer als die Zieldrehzahl (da ja gebremst wird). Bevorzugt entspricht beim Abbremsen die Startdrehzahl der Zieldrehzahl beim Anfahren (es wird z.B. bis zur Maximaldrehzahl angefahren, die dann als Startdrehzahl für das Abbremsen anzusehen ist). Entsprechend entspricht beim Abbremsen bevorzugt die Zieldrehzahl der Startdrehzahl beim Anfahren, also z.B. Null.

Es kann bevorzugt sein, die Drehrichtung des Motors zu ändern. Dadurch kann ein Mahlwerk "entspannt" bzw. "entleert" werden, wobei diesbezüglich versucht werden sollte, die Drehrichtung des Mahlwerks zu ändern, um dessen Vorspannung zu reduzieren und blockierende Partikel wieder auszuwerfen. Das Problem hierbei ist der sehr kurze Spannungsanstieg und die dabei entstehenden Probleme in EMV und Lebensdauer. Dieses Problem ergibt sich nicht unter Benutzung des erfindungsgemäßen Verfahrens, zumindest nicht, wenn der Abbremsvorgang und/oder der anschließende Anfahrvorgang länger als 200 ms brauchen. Daher ist bevorzugt, nach dem Abbremsen ein erneutes Anfahren mit umgekehrter Drehrichtung mittels der Rampenfunktion entsprechend dem Verfahren zu steuern.

Wohlgemerkt müssten die Rampenfunktionen zum Anfahren und Abbremsen oder zum erneuten Anfahren nicht zwingend identisch sein, obwohl dies eine bevorzugte Ausführungsform darstellt. Sie können sich in ihrer Form oder zeitlichen Länge unterscheiden, wobei es jedoch vorteilhaft ist, wenn die grundlegenden Merkmale des erfindungsgemäßen Verfahrens für beide (bzw. alle) Rampenfunktionen erfüllt sind (mindestens 200 ms bis zum Erreichen der Zieldrehzahl).

Eine erfindungsgemäße Vorrichtung zur Ansteuerung bzw. Regelung eines Motors ist zur Ausführung eines Verfahrens nach einem der vorangehenden Ansprüche ausgestaltet. Sie umfasst Informationen zu einer Rampenfunktion oder kann auf solche Informationen zugreifen und ist dazu ausgelegt, die Antriebsleistung zur Ansteuerung des Motors zu steuern bzw. zu regeln. Die Antriebsleistung kann, wie oben dargelegt, über eine Änderung der Spannung bzw. eines Tastgrads, also ggf. eines Phasenwinkels moduliert werden. Elektrische Schaltungen zur Steuerung eines Motors mittels PWM, einer Phasenanschnittsmodulation oder einer Phasenabschnittsmodulation sind im Stand der Technik bekannt.

Bevorzugt umfasst die Vorrichtung eine Konfigurationsschnittstelle ausgelegt zur Annahme von Benutzereingaben zur Konfiguration der Rampenfunktion (s.o.).

Es ist bevorzugt, basierend auf Tests oder Simulationen, eine Rampenfunktion zu wählen, die beim Test bzw. der Simulation zu einem geringen Lärmpegel führte.

Ein Großteil der zuvor genannten Komponenten der Erfindung können ganz oder teilweise in Form von Softwaremodulen in einem Prozessor eines entsprechenden Rechensystems realisiert werden, z.B. von einer Steuereinrichtung eines Kaffeevollautomaten oder eines externen Steuergerätes. Eine weitgehend softwaremäßige Realisierung hat den Vorteil, dass auch schon bisher verwendete Geräte auf einfache Weise durch ein Software-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in ein Rechensystem ladbar ist, mit Programmabschnitten, um die Schritte des erfindungsgemäßen Verfahrens, zumindest die durch einen Computer ausführbaren Schritte, auszuführen, wenn das Programm in dem Rechensystem ausgeführt wird. Dies ist im Grunde die Generierung von Steuersignalen zur Modulation einer einem Elektromotor zur Verfügung gestellten Antriebsleistung mittels der Rampenfunktion. Ein solches Computerprogrammprodukt kann neben dem Computerprogramm gegebenenfalls zusätzliche Bestandteile wie z. B. eine Dokumentation und/oder zusätzliche Komponenten auch Hardware-Komponenten, wie z.B. Hardware-Schlüssel (Dongles etc.) zur Nutzung der Software, umfassen.

Das Prinzip der Erfindung wird im Folgenden anhand einer Zeichnung beispielshalber noch näher erläutert. In der Zeichnung zeigen:
- Figur 1:: ein schematisches Beispiel für einen Kaffeeautomaten,
- Figur 2:: ein Blockschaltbild zum Ablauf eines erfindungsgemäßen Verfahrens,
- Figur 3:: Beispiele für Rampenfunktionen,
- Figur 4:: Beispiel für die Drehzahländerung eines Elektromotors.

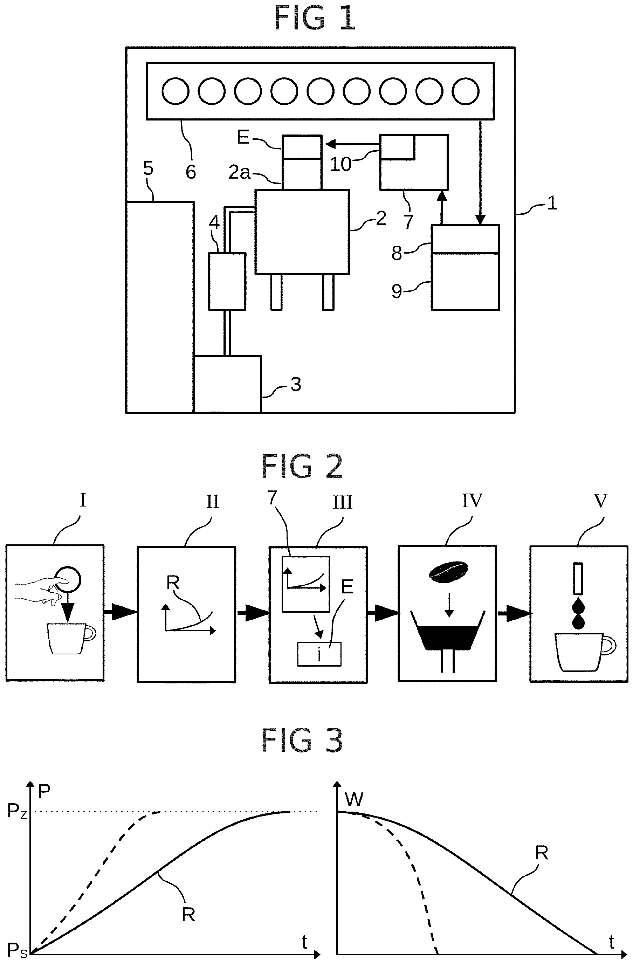

Figur 1 zeigt einen Kaffeevollautomaten 1. Er umfasst neben anderen zur Zubereitung von Kaffee erforderlichen Einheiten insbesondere die folgenden Komponenten:
- eine Brüheinheit 2, die mit einem Mahlwerk 2a gekoppelt ist, wobei das Kaffeepulver aus dem Mahlwerk 2a in der Brüheinheit 2 verpresst wird,
- eine Pumpe 3, durch die Wasser aus einem Wassertank 5 durch einen Durchlauferhitzer als Heizelement 4 hindurch in die Brüheinheit 2 gepumpt wird,
- eine Auswahleinheit 6 zur bedienerseitigen manuellen Auswahl und Angabe eines gewünschten Kaffeegetränketyps und/oder zur Auswahl eines Mahlmodus,
- eine Steuereinrichtung 7, ausgelegt zur Steuerung der Zubereitung eines Kaffeegetränks des ausgewählten Kaffeegetränketyps K durch den Kaffeeautomaten 1, wobei die Steuereinrichtung eine erfindungsgemäße Vorrichtung 10 enthält,
- eine Recheneinheit 9, ausgelegt zur Berechnung von Steuerdaten für die Steuereinrichtung 7, und
- eine Datenschnittstelle 8 zur Herstellung eines Datenkontakts mit der Auswahleinheit 6.

Dadurch können Daten zur Auswahl des Kaffeegetränketyps an die Recheneinheit 9 weitergegeben werden. Der Pfeil von der Auswahleinheit 6 zur Datenschnittstelle 8 soll dabei die Richtung des Datenflusses andeuten. Diese Datenschnittstelle 8 ist dabei auch zum Senden von Steuerdaten (s. zweiter Pfeil) an eine Steuereinrichtung 7 zur Steuerung einer Zubereitung eines Kaffeegetränks des ausgewählten Kaffeegetränketyps durch den Kaffeeautomaten 1 ausgelegt.

Zur Zubereitung eines Kaffeegetränks wird Wasser aus dem Wassertank 5 mittels der Pumpe 3 durch das Heizelement 4 gepumpt, dort auf die Zieltemperatur erwärmt und gelangt im heißen Zustand in die Brüheinheit 2, in der sich Kaffeepulver befindet, welches durch das von einem Elektromotor E angetriebenen Mahlwerk 2a gemahlen wurde. Dieser Vorgang des Mahlens wird mittels der Steuereinrichtung 7 (bzw. der besonderen Vorrichtung 10) auf eine im Folgenden beschriebene Weise gesteuert:

Figur 2 zeigt ein Blockschaltbild zum Ablauf eines erfindungsgemäßen Verfahrens zur Ansteuerung (entspricht einer Steuerung oder Regelung) eines Elektromotors des Mahlwerks 2a z.B. des in Figur 1 gezeigten Kaffeevollautomaten 1.

In Schritt I erfolgt eine Auswahl eines Kaffeegetränks durch einen Benutzer mittels der Auswahleinheit 6.

In Schritt II wird eine Rampenfunktion gewählt. Dies kann ebenfalls durch den Benutzer mittels der Auswahleinheit 6 erfolgen, es kann aber auch eine vorgefertigte Rampenfunktion R verwendet werden oder eine Rampenfunktion R, die mit dem ausgewählten Kaffeegetränk verknüpft ist.

In Schritt III wird der Elektromotor E mittels der Vorrichtung 10 basierend auf der Rampenfunktion R angesteuert. Dabei wird während des Anfahrens des Elektromotors E eine Antriebsleistung mittels der Rampenfunktion R so moduliert, dass der Anstieg bzw. Abfall der dem Elektromotor E zur Verfügung gestellten Antriebsleistung von einem Startwert PS bis zu einem vorgegebenen Zielwert PZ das Fünffache des Zielwerts pro Sekunde nicht übersteigt, also mindestens 200 ms dauert. Dies wird durch die Rampenfunktion R festgelegt. Diese ist entsprechend ausgestaltet.

In Schritt IV werden mittels des durch den Elektromotor E angetriebenen Mahlwerks 2a Kaffeebohnen zu Kaffeepulver gemahlen,

In Schritt V wird das gewünschten Kaffeegetränk aus dem gemahlenen Kaffeepulver aufgebrüht.

Figur 3 zeigt Beispiele für Rampenfunktionen R. Links sieht man ein Beispiel für eine Rampenfunktion R (durchgezogene Linie), welche direkt auf die Antriebsleistung P wirkt. Sie hat einen moderaten Anstieg von dem Startwert PS (hier Null) bis zum Zielwert PZ im Gegensatz zu der gestrichelt angedeuteten Funktion, die sehr steil startet und viel früher den Zielwert PZ erreicht.

Rechts ist ein weiteres Beispiel für eine Rampenfunktion R dargestellt, die auf einen Phasenwinkel W einer Phasenanschnittsmodulation wirkt. Es wird bei einem recht großen Phasenwinkel W gestartet, was bedeutet, dass der Phasenanschnitt groß und damit die Antriebsleistung P klein ist. Die Rampenfunktion R endet mit einem Phasenwinkel W von Null, was bedeutet, dass der Phasenanschnitt klein und damit die Antriebsleistung P groß ist. Die Antriebsleistung P würde dem Verlauf der Antriebsleistung P im linken Bild entsprechen. Es ist hier auch wieder eine Kurve gestrichelt angedeutet, die einem steilen Verlauf der Antriebsleistung entsprechen würde.

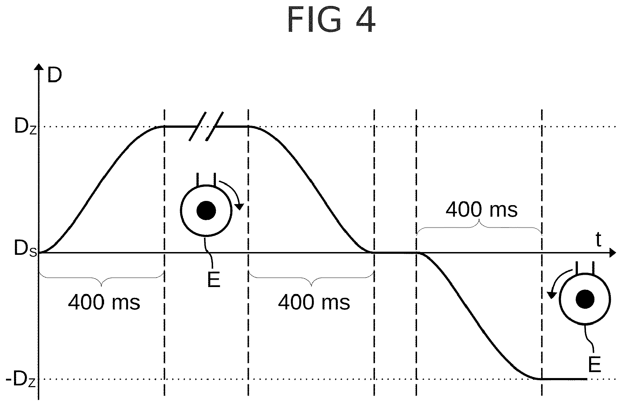

Figur 4 zeigt ein Beispiel für die Drehzahländerung eines Elektromotors E. Dargestellt ist eine Auftragung der Drehzahl D gegen die Zeit t. Zunächst steigt die Drehzahl D von einer Startdrehzahl Ds (hier Null) bis zu einer Zieldrehzahl Dz an. Dies geschieht durch das erfindungsgemäße Verfahren und dauert hier 400 ms. Der Elektromotor E dreht nun in einer ersten Drehrichtung über eine gewisse Zeit, was hier durch den Schnitt der Linie angedeutet wird. In dieser Zeit würde das Mahlwerk eines Kaffeeautomaten nach Figur 1 also mit normaler Drehzahl D laufen. Dann wird der Elektromotor E innerhalb von 400 ms gemäß dem erfindungsgemäßen Verfahren wieder auf die Startdrehzahl Ds (Null) abgebremst und danach in umgekehrter Drehrichtung ebenfalls gemäß dem erfindungsgemäßen Verfahren innerhalb von 400 ms wieder angefahren, dies wird durch den Verlauf der Linie im negativen Quadranten bis zu der negativen Zieldrehzahl Dz dargestellt. Die Steuerung des Elektromotors E kann mit Rampenfunktionen R erfolgen, wie sie in Figur 3 dargestellt sind. Die Umkehr der Drehrichtung kann auch weggelassen werden und einfach ein Anfahren und Abbremsen des Motors erfolgen.

Da es sich bei der vorhergehenden, detailliert beschriebenen Ausführungsformen um Beispiele handelt, können diese in üblicher Weise vom Fachmann in einem weiten Umfang modifiziert werden, ohne den Bereich der Erfindung zu verlassen. Insbesondere können auch die konkreten Ausgestaltungen der Vorrichtung oder des Verfahrens in anderer Form als in der hier beschriebenen folgen. Weiterhin schließt die Verwendung der unbestimmten Artikel "ein" bzw. "eine" nicht aus, dass die betreffenden Merkmale auch mehrmals oder mehrfach vorhanden sein können.

### Bezugszeichenliste

- 1: Kaffeeautomat
- 2: Brühkammer
- 2a: Mahlwerk
- 3: Pumpe
- 4: Heizelement
- 5: Wassertank
- 6: Auswahleinheit
- 7: Steuereinrichtung
- 8: Datenschnittstelle
- 9: Recheneinheit
- 10: Vorrichtung
- D: Drehzahl
- D_{S}: Startdrehzahl
- D_{Z}: Zieldrehzahl
- E: Elektromotor
- P: Antriebsleistung
- P_{S}: Startwert
- P_{Z}: Zielwert
- R: Rampenfunktion
- W: Phasenwinkel

## Patentansprüche

1. Verfahren zur Ansteuerung eines Elektromotors (E), wobei für eine Änderung der Drehzahl (D) des Elektromotors (E) von einer Startdrehzahl (Ds) zu einer Zieldrehzahl (Dz) eine dem Elektromotor (E) zur Verfügung gestellte Antriebsleistung (P) mittels einer Rampenfunktion (R) so moduliert wird, dass ausgehend von der Startdrehzahl (Ds) die Zieldrehzahl (D_{Z}) erst nach mindestens 200 ms erreicht wird.

2. Verfahren nach Anspruch 1, **dadurch gekennzeichnet, dass** sich die Antriebsleistung (P) aus einer modulierten Spannung ergibt und die Spannung während der Änderung der Drehzahl (D), insbesondere eines Anfahrens oder Abbremsens, des Elektromotors (E) mittels der Rampenfunktion (R) moduliert wird,
bevorzugt wobei innerhalb einer Vielzahl von vorgegebenen Perioden Spannungsimpulse mit auf der Rampenfunktion (R) basierenden Tastgraden den Elektromotor (E) antreiben und die Tastgrade moduliert werden,
besonders bevorzugt wobei
- bei einer Gleichspannung zum Antrieb des Elektromotors (E) eine Pulsweitenmodulation durchgeführt wird, wobei der Tastgrad das Verhältnis der Dauer der Spannungspulse zur Dauer der jeweiligen Periode angibt und
- bei einer Wechselspannung zum Antrieb des Elektromotors (E) eine Phasenanschnittsmodulation oder eine Phasenabschnittsmodulation durchgeführt wird, wobei der Tastgrad durch einen Phasenwinkel charakterisiert ist, bei dem der Phasenanschnitt endet oder der Phasenabschnitt beginnt.

3. Verfahren nach Anspruch 2, **dadurch gekennzeichnet, dass** die Rampenfunktion (R) so gestaltet ist, dass sich die Antriebsleistung stetig ändert, bevorzugt stetig zunimmt oder stetig abnimmt, insbesondere wobei
- zum Anfahren der Tastgrad zu Beginn der Rampenfunktion (R) bei einem Wert größer Null beginnt und bevorzugt bei einem Wert größer als 80% endet, bevorzugt wobei im Falle einer Phasenanschnittsmodulation die Rampenfunktion (R) bei einem Phasenwinkel größer als 20° beginnt,
- zum Abbremsen der Tastgrad zu Beginn der Rampenfunktion (R) bei einem Wert kleiner 100% beginnt und bevorzugt bei einem Wert kleiner als 20% endet, bevorzugt wobei im Falle einer Phasenanschnittsmodulation die Rampenfunktion (R) bei einem Phasenwinkel kleiner als 160° bei einer Halbwelle oder 340° bei einer vollen Welle beginnt.

4. Verfahren nach einem der vorangehenden Ansprüche, **dadurch gekennzeichnet, dass** der Anstieg oder Abfall der dem Elektromotor (E) zur Verfügung gestellten Effektivleistung (P) von einem Startwert (PS) bis zu einem vorgegebenen Zielwert (PZ) Z, zumindest in einem vorgegebenen Intervall der Rampenfunktion (R), 5 Z pro Sekunde nicht übersteigt,
bevorzugt wobei das vorgegebene Intervall der Rampenfunktion (R) zumindest das letzte Viertel der Rampenfunktion (R) umfasst, insbesondere die zweite Hälfte, besonders bevorzugt die gesamte Rampenfunktion (R).

5. Verfahren nach einem der vorangehenden Ansprüche, **dadurch gekennzeichnet, dass** die Rampenfunktion (R) vorgegeben ist, und insbesondere eine zeitdiskrete Änderung eines Phasenanschnitts bewirkt, oder dass die Rampenfunktion (R) während der Ansteuerung des Elektromotors (E) basierend auf Sensorwerten geregelt wird, wobei eine PID-geregelte Änderung des Phasenanschnitts bevorzugt ist.

6. Verfahren nach einem der vorangehenden Ansprüche, **dadurch gekennzeichnet, dass** die zeitliche Gesamtlänge der Rampenfunktion (R) länger ist als 400 ms und/oder kürzer als 2 s.

7. Verfahren nach einem der vorangehenden Ansprüche, **dadurch gekennzeichnet, dass** die Rampenfunktion (R) durch einen Benutzer ausgewählt und/oder konfiguriert werden kann, bevorzugt wobei
- ein minimaler und/oder maximaler Phasenanschnitt,
- eine Zeit für die zeitliche Gesamtlänge der Rampenfunktion (R),
- eine Form der Rampenfunktion (R),
- eine minimale und/oder maximale Breite eines Tastgrades, eingestellt werden kann.

8. Verfahren nach einem der vorangehenden Ansprüche, **dadurch gekennzeichnet, dass** die Rampenfunktion (R) so gestaltet ist, dass die elektromagnetische Verträglichkeit und/oder die Lebensdauer des Elektromotors (E) optimiert ist.

9. Verfahren nach einem der vorangehenden Ansprüche, **dadurch gekennzeichnet, dass** die Rampenfunktion (R) eine Änderung der Antriebsleistung (P) von einem Startwert (Ps) zu einem Zielwert (P_{Z}) steuert und die Rampenfunktion (R) so gestaltet ist, dass ein Anstieg oder Abfall der dem Elektromotor (E) zur Verfügung gestellten Antriebsleistung (P) von einem Startwert (P_{S}) bis zu einem vorgegebenen Zielwert (P_{Z}) Z, zumindest in einem vorgegebenen Intervall der Rampenfunktion (R), 5 Z pro Sekunde nicht übersteigt.

10. Verfahren nach einem der vorangehenden Ansprüche, **dadurch gekennzeichnet, dass** sowohl ein Anfahren des Elektromotors (E) als auch ein Abbremsen des Elektromotors (E) mittels der Rampenfunktion (R) erfolgt, wobei beim Anfahren die Zieldrehzahl (D_{Z}) höher ist als die Startdrehzahl (Ds) und die Startdrehzahl (Ds) bevorzugt Null beträgt, und die Startdrehzahl (D_{S}) beim Abbremsen der Zieldrehzahl (D_{Z}) beim Anfahren entspricht und bevorzugt die Zieldrehzahl (Dz) beim Abbremsen der Startdrehzahl (Ds) beim Anfahren entspricht,
bevorzugt wobei nach dem Abbremsen ein erneutes Anfahren mit umgekehrter Drehrichtung erfolgt, welches bevorzugt ebenfalls mittels der Rampenfunktion (R) erfolgt, so dass für dieses Anfahren ausgehend von der Startdrehzahl (Ds) die Zieldrehzahl (D_{Z}) erst nach mindestens 200 ms erreicht wird.

11. Vorrichtung (10) zur Ansteuerung eines Elektromotors (E), **dadurch gekennzeichnet, dass** sie zur Ausführung eines Verfahrens nach einem der vorangehenden Ansprüche ausgestaltet ist.

12. Vorrichtung nach Anspruch 9 umfassend eine Konfigurationsschnittstelle (6) ausgelegt zur Annahme von Benutzereingaben zur Konfiguration der Rampenfunktion (R), insbesondere nach einem Verfahren gemäß Anspruch 7.

13. Kaffeevollautomat (1) umfassend eine Vorrichtung (10) nach einem der Ansprüche 11 oder 1, wobei die Vorrichtung (10) bevorzugt zur Ansteuerung eines Elektromotors (E) eines Mahlwerks (2a) ausgestaltet ist.

14. Computerprogrammprodukt, umfassend Befehle, die bei der Ausführung des Programms durch einen Computer diesen zur Generierung von Steuersignalen zur Modulation einer einem Elektromotor (E) zur Verfügung gestellten Antriebsleistung (P) mittels der Rampenfunktion (R) gemäß einem der Ansprüche 1 bis 10 zu veranlassen.

15. Computerlesbares Speichermedium, umfassend Befehle, die bei der Ausführung durch einen Computer diesen zur Generierung von Steuersignalen zur Modulation einer einem Elektromotor (E) zur Verfügung gestellten Antriebsleistung (P) mittels der Rampenfunktion (R) gemäß einem der Ansprüche 1 bis 10 zu veranlassen.
